# EUROPEAN PATENT APPLICATION

(11) **EP 2 688 027 A1**
(43) Date of publication of application: **22.01.2014**
(21) Application number: 12177392.3
(22) Date of filing: 20.07.2012
(51) Int. Cl.: G06Q 30/02, G06F 9/44, H04M 1/725, G06F 3/0481

(54) **Method, system and apparatus for collecting data associated with applications**

(71) Applicant: BlackBerry Limited, Waterloo, ON N2K 0A7 (CA)
(72) Inventor: Proudfoot, Ryan, Brock, Fredericton, New Brunswick E3B 1B8 (CA); Canton, Raymond, Lee, Kanata, Ontario K2K 3K1 (CA); Rydenhag, Daniel, Tobias, 413 04 Gothenberg (SE)
(74) Representative: MERH-IP Matias Erny Reichl Hoffmann

(57) **Abstract**

A method, system and apparatus for collecting data associated with applications are provided. In response to receiving an indication that an icon associated with a given application stored at a memory of a device has been selected, the device comprising a processor, the memory, a communication interface and a display, an input option is provided at the display to receive input data associated with the given application without launching the given application. Data associated with the input data is transmitted to a remote computing device.

## Description

### FIELD

The specification relates generally to mobile devices, and specifically to a method, system and apparatus for collecting data associated with applications.

### BACKGROUND

The evolution of computers is currently quite active in the mobile device environment. It is now well-known to including calendaring, contacts, and messaging functions in mobile devices. More recently, there has been a veritable explosion of the number and type of applications that are configured to the unique form factors and computing environments of mobile devices.

### SUMMARY

Rating applications in devices, and especially mobile devices, is currently challenging. For example, currently users can only rate/review/upgrade applications from within storefront applications and/or from within the applications themselves. This means that users must actively launch a storefront application and/or a given application, with all the associated functionality, search for that aspect of the storefront application and/or the given application that enables receipt of rating data and/or review data, enter the rating/review data and transmit the data. Studies have shown that these steps are such an impediment that users tend to rate applications only when negative ratings are likely: when users are happy they tend not to rate applications. This leads to an overall skewing of ratings towards negative reviews. Further, in order for an application to include ratings functionality, the third party developers generally need to incorporate logic into an application, such as an API (application programming interface), and invoke the logic at some point to prompt a user to rate/review the application; when many applications stored at a device include the same rating logic, memory space is wasted at the device due to redundant storage of the same logic.

A first aspect of the specification provides a device comprising: a processor, a memory, a communication interface and a display, the processor enabled to: in response to receiving an indication that an icon associated with a given application stored at the memory has been selected, provide an input option at the display to receive input data associated with the given application without launching the given application; and, transmit, via the communication interface, data associated with the input data to a remote computing device.

The input data can comprise one or more of rating data and review data associated with the given application, and the data associated with the input data can comprise at least a portion of one or more of the rating data and the review data.

The memory can stores a network address of the remote computing device.

The memory can store an identifier of the given application and the processor can be further enabled to transmit the data associated with the input data with the identifier.

The processor can be further enabled to provide the input option and transmit the data associated with the input data in another application different from the given application, the another application processed in the background.

The processor can be further enabled to process another application for managing applications, the another application for providing the input option and transmitting the data associated with the input data, the another application launched in the background when the indication that the icon has been selected is received.

The icon can be displayed at a given screen of the display, and the processor can be further enabled to receive the input data from the given screen.

The remote computing device can comprise an application server and the data associated with the input data can be stored in association with the given application for later access by other devices.

The processor can be further enabled to animate the icon to provide the input option, such that the input option appears to be associated with the given application and not another application for receiving the input.

The input data can comprise a confirmation that a new application is to be installed, the data can comprise a request to install the new application and the processor can be further enabled to receive installation data from the remote computing device in response to transmitting the request to the remote computing device.

The input data can comprise a confirmation that the given application is to be updated, the data can comprise a request to update the given application and the processor can be further enabled to receive update data from the remote computing device in response to transmitting the request to the remote computing device.

Another aspect of the specification provides a method comprising, at a device comprising a processor, the memory, a communication interface and a display, in response to receiving an indication that an icon associated with a given application stored at the memory has been selected, providing, via the processor, an input option at the display to receive input data associated with the given application without launching the given application; and, transmitting, via the communication interface, data associated with the input data to a remote computing device.

The input data can comprise one or more of rating data and review data associated with the given application, and the data associated with the input data can comprise at least a portion of one or more of the rating data and the review data.

The memory can store an identifier of the given application and the method can further comprise transmitting the data associated with the input data with the identifier.

The method can further comprise providing the input option and transmitting the data associated with the input data in another application different from the given application, the another application processed in the background.

The method can further comprise processing another application for managing applications, the another application for providing the input option and transmitting the data associated with the input data, the another application launched in the background when the indication that the icon has been selected is received.

The icon can be displayed at a given screen of the display, and the method can further comprise receiving the input data from the given screen.

The method can further comprise animating the icon to provide the input option, such that the input option appears to be associated with the given application and not another application for receiving the input data.

The input data can comprise a confirmation that a new application is to be installed, the data can comprise a request to install the new application and the method can further comprise receiving installation data from the remote computing device in response to transmitting the request to the remote computing device.

The input data can comprise a confirmation that the given application is to be updated, the data can comprise a request to update the given application and the method can further comprise receiving update data from the remote computing device in response to transmitting the request to the remote computing device.

Yet a further aspect of the specification provides a computer program product, comprising a computer usable medium having a computer readable program code adapted to be executed to implement a method comprising: at a device comprising a processor, the memory, a communication interface and a display, in response to receiving an indication that an icon associated with a given application stored at the memory has been selected, providing, via the processor, an input option at the display to receive input data associated with the given application without launching the given application; and, transmitting, via the communication interface, data associated with the input data to a remote computing device.

### BRIEF DESCRIPTIONS OF THE DRAWINGS

For a better understanding of the various implementations described herein and to show more clearly how they may be carried into effect, reference will now be made, by way of example only, to the accompanying drawings in which:

Fig. 1 depicts a system for collecting data associated with applications, according to non-limiting implementations.

Fig. 2 depicts a device for collecting data associated with applications, according to non-limiting implementations.

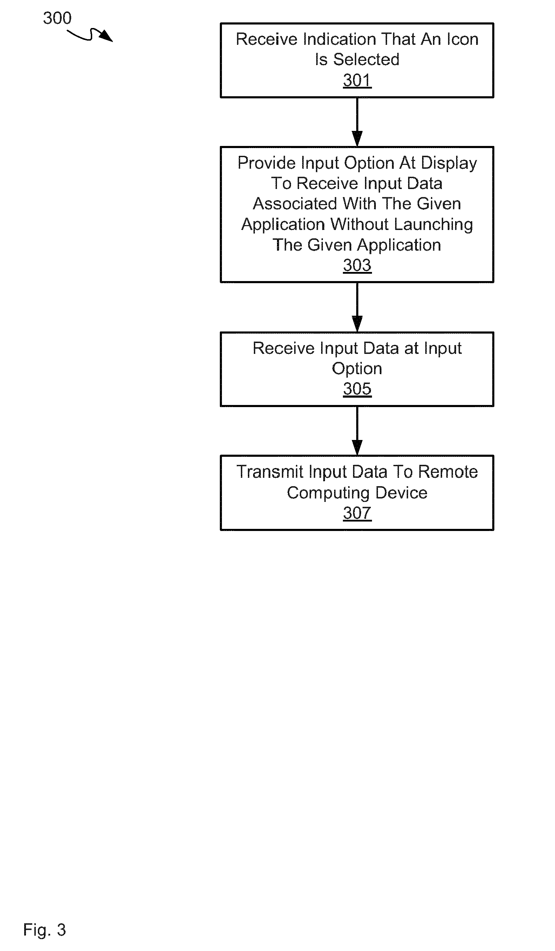

Fig. 3 a method for collecting data associated with applications, according to non-limiting implementations.

Fig. 4 depicts the device of Fig. 2 with an icon associated with an application being selected, according to non-limiting implementations.

Fig. 5 depicts the system of Fig. 1, with input data being received, according to non-limiting implementations.

Fig. 6 depicts a sequence provided at a display of the device of Fig. 2, to provide an input option thereon, according to non-limiting implementations.

Fig. 7 depicts the device of Fig. 2, with an input option provided thereon, according to non-limiting implementations.

Fig. 8 depicts the system of Fig. 1, with data associated with input data received at the device of Fig. 2 transmitted to a remote computing device, according to non-limiting implementations.

Fig. 9 depicts the system of Fig. 1, with data associated with input data received at the device of Fig. 2 transmitted to a remote computing device, and application installation data received in response, according to non-limiting implementations.

Fig. 10 depicts the device of Fig. 2, with an additional icon associated with a newly installed application provided thereon, according to non-limiting implementations.

Fig. 11 depicts the system if Fig. 1 with an application upgrade notification pushed to the device of Fig. 2, according to non-limiting implementations.

Fig. 12 depicts the device of Fig. 2, with an icon associated with an application modified to indicate that an upgrade is available, according to non-limiting implementations.

Fig. 13 depicts the device of Fig. 2, with an input option provided thereon that includes an upgrade option, according to non-limiting implementations.

Fig. 14 depicts the system of Fig. 1, with data associated with input data received at the device of Fig. 2 transmitted to a remote computing device, and application upgrade data received in response, according to non-limiting implementations.

### DETAILED DESCRIPTION

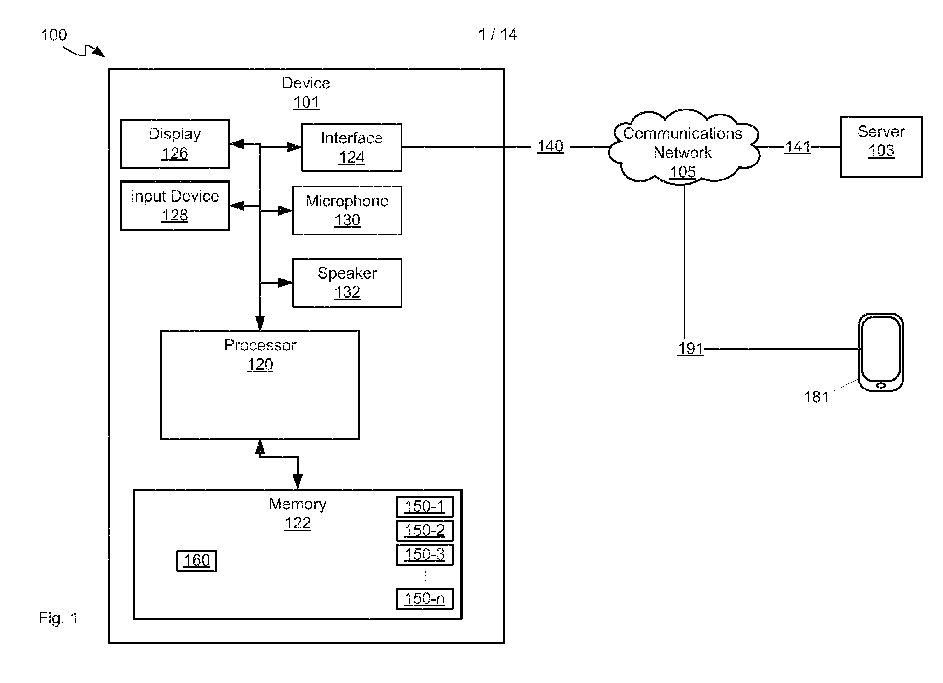

Fig. 1 depicts a system 100 for collecting data associated with applications, system 100 comprising a first device 101 in communication with a server 103 via at least one communications network 105, according to non-limiting implementations. First device 101 will be interchangeably referred to hereafter as device 101. The at least one communications network 105 will be interchangeably referred to hereafter as network 105. Device 101 comprises a processor 120 interconnected with a memory 122, a communications interface 124, a display 126 and an input device 128, and optionally a microphone 130 and speaker 132. It is further appreciated that device 101 communicates with server 103 via interface 124, a link 140 between device 101 and network 105, and a link 141 between server 103 and network 105. System 100 further comprises at least one other device 181 in communication with network 105 via a link 191.

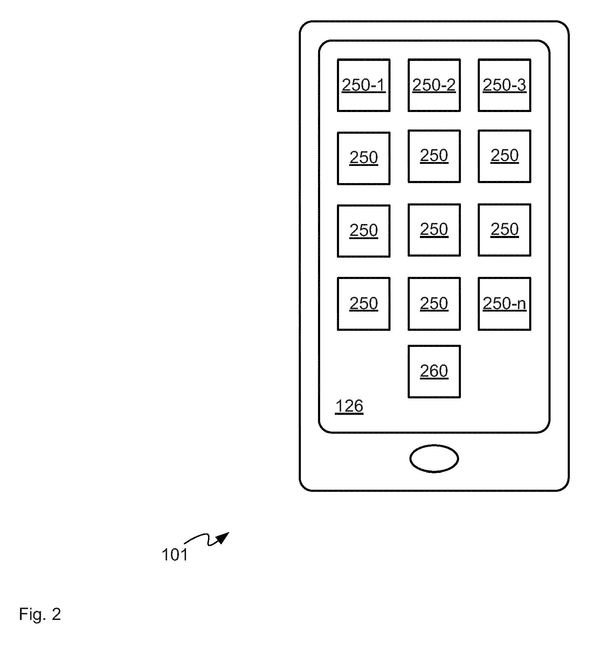

Device 101 further stores applications 150-1, 150-2, 150-3....150-n at memory 122. Applications 150-1, 150-2, 150-3....150-n will also be referred to hereafter generically as an application 150 and collectively as applications 150. Device 101 further stores an application 160 for managing applications 150 at memory 122. With reference to Fig. 2, which depicts a perspective view of device 101, according to non-limiting implementations, each at least a subset of applications 150 correspond to an icon 250 displayed at display 126. For example, applications 150-1, 150-2, 150-3, 150-n each correspond to respective icons 250-1, 250-2, 250-3, 250-n displayed at display 126. It is appreciated that the remaining icons 250 correspond to other respective applications 150. Further icons 250, 250-1, 250-2, 250-3, 250-n will be referred to generically as an icon 250 and collectively as an icon 250. Further, icon 260 displayed at display 126 corresponds to application 160. When an icon 250, 260 is actuated, the corresponding application 150, 160 will be processed by processor 120 and launched for interaction with a user via display 126 and input device 128. It is further appreciated that in Fig. 2, display 126 is providing a given screen which, in some implementation is one or more of a home screen and an applications screen.

In any event, in general, device 101 is enabled to: in response to receiving an indication that an icon 250 associated with a given application 150 stored at memory 122 has been selected, provide an input option at display 126 to receive input data associated with the given application 150 without launching the given application 150; and, transmit, via the communication interface 124, data associated with the input data to a remote computing device, such as server 103, as will presently be explained.

Device 101 can be any type of electronic device that can be used in a self-contained manner to process applications 150, 160. Device 101 includes, but is not limited to, any suitable combination of electronic devices, communications devices, computing devices, personal computers, laptop computers, portable electronic devices, mobile computing devices, portable computing devices, tablet computing devices, laptop computing devices, desktop phones, telephones, PDAs (personal digital assistants), cellphones, smartphones, e-readers, internet-enabled appliances and the like. Other suitable devices are within the scope of present implementations.

Server 103 generally comprises an applications server for storing and managing download of applications 150 device 101, as well as upgrades to applications 150, and storing data associated with applications, such as rating data, review data and the like. For example, device 101 can download one or more applications 150 from server 103, and/or upgrade an application 150 by downloading upgrade data from server 103, and transmit rating data, review data etc. to server 103 for storage and later access by other devices, such as device 181. Server 103 can store the rating data, review data etc. in association with a respective application 150 and/or an identifier of a respective application 150, such that the device 181 can determine which applications 150 are highest rated, lowest rated, best reviewed, worst reviewed, etc.; such data can assist the other devices in determining which applications 150 to download and install. It is further appreciated that ratings/review data can be shared with device 181 by one or more of pushing ratings/review data to device 181 and/or upon request, as will presently be explained.

Server 103 can be based on any well-known server environment including a module that houses one or more central processing units, volatile memory (e.g. random access memory), persistent memory (e.g. hard disk devices) and network interfaces to allow server 103 to communicate over link 141. For example, server 103 can be a Sun Fire V480 running a UNIX operating system, from Sun Microsystems, Inc. of Palo Alto Calif., and having four central processing units each operating at about nine-hundred megahertz and having about sixteen gigabytes of random access memory. However, it is to be emphasized that this particular server is merely exemplary, and a vast array of other types of computing environments for server 103 are contemplated. It is further more appreciated that server 103 can comprise any suitable number of servers that can perform different functionality of server implementations described herein. For example, as described below, system 100 can comprise sharing functionality and/or sharing infrastructure, and push functionality and/or push infrastructure. While this functionality will be described with reference to server 103, it is appreciated that sharing functionality and push functionality can be distributed between different servers that are specifically configured for such functionality.

Link 140 comprises any suitable link for enabling device 101 to communicate with network 105. Similarly, link 141 comprises any suitable link for enabling server 103 to communicate with network 105. Similarly, link 191 comprises any suitable link for enabling device 181 to communicate with network 105. Links 140, 141, 191 can hence each include any suitable combination of wired and/or wireless links, wired and/or wireless devices and/or wired and/or wireless networks, including but not limited to any suitable combination of USB (universal serial bus) cables, serial cables, wireless links, cell-phone links, cellular network links (including but not limited to 2G, 2,5G, 3G, 4G+, and the like) wireless data, Bluetooth links, NFC (near field communication) links, WiFi links, WiMax links, packet based links, the Internet, analog networks, the PSTN (public switched telephone network), access points, and the like, and/or a combination.

It is appreciated that Fig. 1 further depicts a schematic diagram of device 101 according to non-limiting implementations. It should be emphasized that the structure of device 101 in Fig. 1 is purely an example, and contemplates a device that can be used for both wireless voice (e.g. telephony) and wireless data communications (e.g. email, web browsing, text, and the like). However, while Fig. 1 contemplates a device that can be used for telephony, in other implementations, device 101 can comprise a device enabled for implementing any suitable specialized functions, including but not limited to one or more of telephony, computing, appliance, and/or entertainment related functions.

Device 101 comprises at least one input device 128 generally enabled to receive input data, and can comprise any suitable combination of input devices, including but not limited to a keyboard, a keypad, a pointing device, a mouse, a track wheel, a trackball, a touchpad, a touch screen and the like. Other suitable input devices are within the scope of present implementations. In specific non-limiting implementations described herein, input device 128 comprises a touch screen for receiving touch input data.

Input from input device 128 is received at processor 120 (which can be implemented as a plurality of processors, including but not limited to one or more central processors (CPUs)). Processor 120 is configured to communicate with a memory 122 comprising a non-volatile storage unit (e.g. Erasable Electronic Programmable Read Only Memory ("EEPROM"), Flash Memory) and a volatile storage unit (e.g. random access memory ("RAM")). Programming instructions that implement the functional teachings of device 101 as described herein are typically maintained, persistently, in memory 122 and used by processor 120 which makes appropriate utilization of volatile storage during the execution of such programming instructions. Those skilled in the art will now recognize that memory 122 is an example of computer readable media that can store programming instructions executable on processor 120. Furthermore, memory 122 is also an example of a memory unit and/or memory module.

In particular, it is appreciated that memory 122 stores application 160, different from applications 150 that, when processed by processor 120 enables processor 120 to: in response to receiving an indication that an icon 250 associated with a given application 150 stored at memory 122 has been selected, provide an input option at display 126 to receive input data associated with the given application 150 without launching the given application 150; and, transmit, via the communication interface 124, data associated with the input data to a remote computing device, such as server 103. However, application 160, when processed by processor 120, further enables processor 120 to download applications 150 for installation from server 103, and access review data, rating data and the like stored at server 103. Indeed, it is appreciated that application 160, when processed by processor 120, enables processor 120 to behave as an interface between device 101 and server 103. It is further appreciated that applications 150, 160 are examples of programming instructions stored at memory 122.

It is yet further appreciated that application 160 can be processed in the background at device 101; in other words, processor 120 can process application 160 without displaying one or more of a rendering of application 160 at display 126 and a graphic user interface associated with application 160 at display 126.

Processor 120 in turn can also be configured to communicate with a display 126, and optionally a microphone 130 and a speaker 132. Display 126 comprises any suitable one of or combination of CRT (cathode ray tube) and/or flat panel displays (e.g. LCD (liquid crystal display), plasma, OLED (organic light emitting diode), capacitive or resistive touch screens, and the like). When display 126 comprises a touch screen, it is appreciated that display 126 and input device 128 are combined into one apparatus. Microphone 130, when present, comprises any suitable microphone for receiving sound data. Speaker 132, when present, comprises any suitable speaker for providing sound data, audible alerts, audible communications from remote communication devices, and the like, at device 101.

In some implementations, input device 128 and display 126 are external to device 101, with processor 120 in communication with each of input device 128 and display 126 via a suitable connection and/or link.

It is yet further appreciated, that display 126 is enabled to display icons 250, 260 and further that an icon 250, 260 can be used to launch a respective application 150, 260. For example, processor 120 can be enabled to determine that a given icon 250, 260 is actuated at display 126, for example by receiving actuation input data from input device 128, and in turn launch a respective application 150, 160. However, it is appreciated icons 250, 260 can be selected without launching a respective application 150, 160 as will presently be described.

Processor 120 also connects to interface 124, which can be implemented as one or more radios and/or connectors and/or network adaptors, configured to communicate with network 105 via link 140. In general, it will be appreciated that interface 124 is configured to correspond with the network architecture that is used to implement link 140, as described above. In other implementations a plurality of links with different protocols can be employed and thus interface 124 can comprise a plurality of interfaces to support each link.

In any event, it is appreciated that any suitable combination of interfaces is within the scope of present implementations.

Further, it should be understood that in general a wide variety of configurations for device 101 are contemplated.

It is further appreciated that device 181 can be substantially similar to device 101 and comprises a processor, memory, communication interface, display, input device etc., respectively similar to processor 120, memory 122, communication interface 124, display 126, input device 128, etc., and can have similar functionality, storing at least application 160 such that device 181 can access review/ratings data from server 103, and/or receive push notifications and/or sharing data from server 103 (and/or device 101).

Attention is now directed to Fig. 2 which depicts a flowchart of a method 300 for collecting data associated with applications, according to non-limiting implementations. In order to assist in the explanation of method 300, it will be assumed that method 300 is performed using system 100. Furthermore, the following discussion of method 300 will lead to a further understanding of system 100 and its various components. However, it is to be understood that system 100 and/or method 300 can be varied, and need not work exactly as discussed herein in conjunction with each other, and that such variations are within the scope of present implementations.

It is appreciated that, in some implementations, method 300 is implemented in system 100 by processor 120 of device 101. Indeed, method 300 is one way in which device 101 can be configured. It is to be emphasized, however, that method 300 need not be performed in the exact sequence as shown, unless otherwise indicated; and likewise various blocks may be performed in parallel rather than in sequence; hence the elements of method 300 are referred to herein as "blocks" rather than "steps". It is also to be understood, however, that method 300 can be implemented on variations of system 100 as well.

At block 301, processor 120 receives an indication that an icon 250 associated with a given application 150 has been selected. At block 303, processor 120 provides an input option at display 126 to receive input data associated with the given application 150 without launching given application 150. At block 305, processor 120 receives input data at the input option. And, at block 307, processor 120 transmits data associated with the input data to a remote computing device via interface 124.

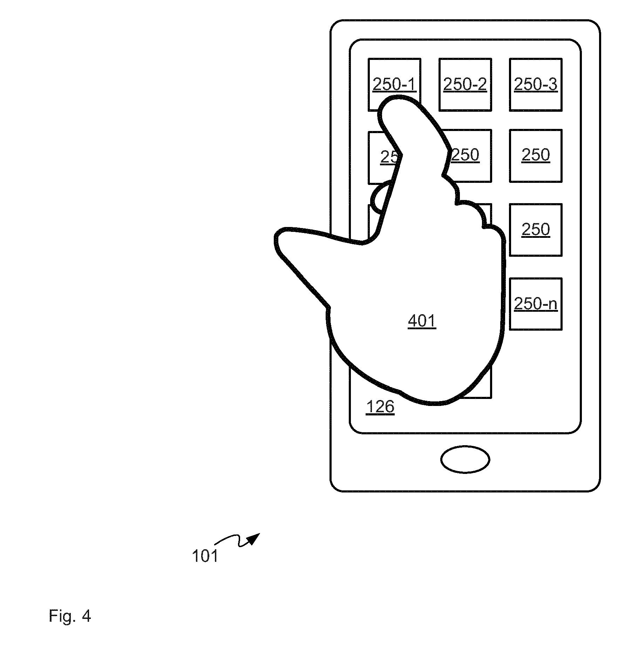

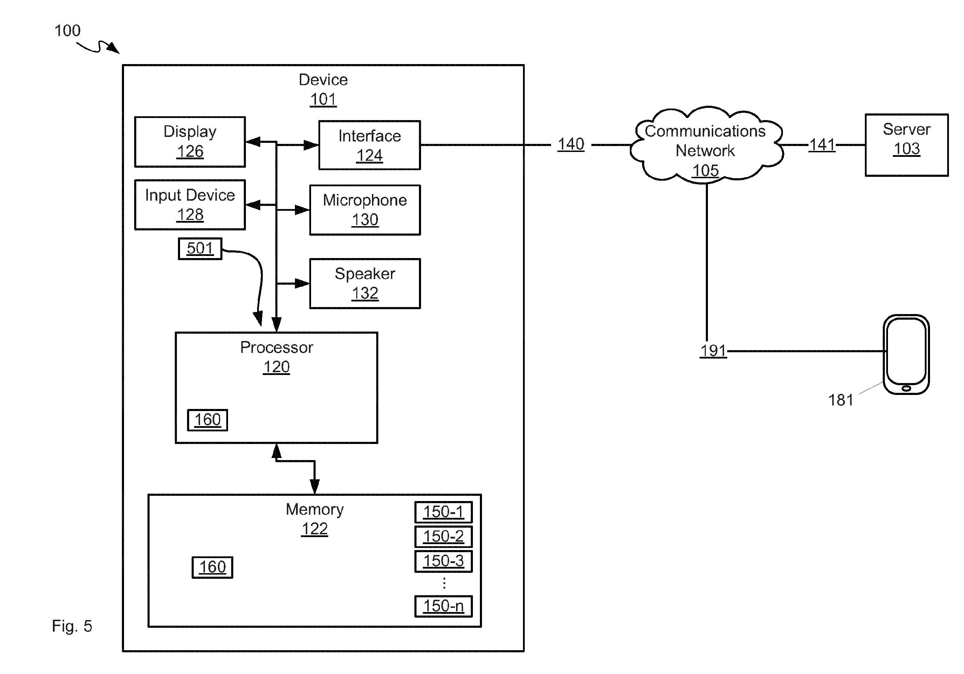

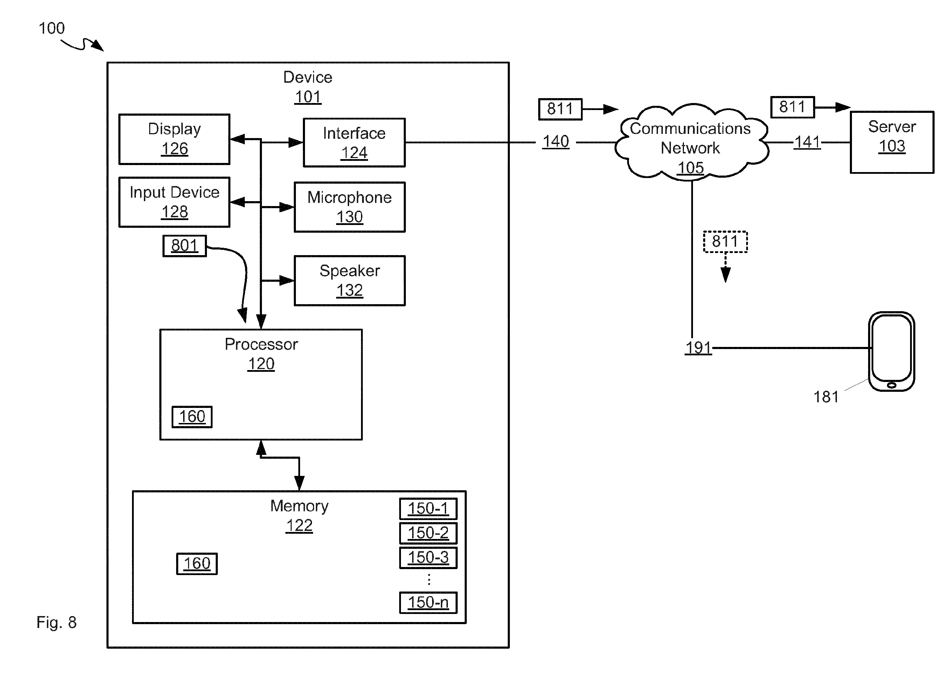

A non-limiting example of method 300 will now be described with reference to Figs. 4 to 8, where Figs. 4, 6 and 7 each depict graphic user interfaces (GUIs) associated with application 160, and Figs. 5 and 8 are each substantially similar to Fig. 1 with like elements having like numbers.

With reference to Figs. 4 and 5, a finger of a hand 401 of a user touches icon 250-1, such that icon 250-1 input device 128 (i.e. a touch screen) generates an indication 501 of icon 250-1 being selected and conveys indication 501 to processor 120 (i.e. block 301). In some implementations, indication 501 can be indicative of a "long press" of icon 250-1, i.e. hand 401 touches icon 250-1 for a period of time above a threshold time period, for example about 1 second or the like, which indicates that icon 250-1 is selected but not actuated. In other words, processor 120 determines that icon 250-1 is selected but not actuated such that associated application 150-1 is not launched. It is appreciated that any criteria for determining a long press is within the scope of present implementations (i.e. the length of threshold time period is not particularly limiting), and further any indication 501 that icon 250-1 has been selected is within the scope of present implementations. For example, icon 250-1 could alternatively be selected via a keyboard, a keypad, a pointing device, a mouse, a track wheel, a trackball, a touchpad and the like, used to scroll through icons 250 and select a given icon 250.

Once processor 120 receives indication 501, processor 120 can also process application 160, for example in the background, when application 160 is not already being processed by processor 120. It is appreciated that upon processing application 160, processor 120 provides an input option at display 126 to receive input data associated with given application 150-1 (block 303). Indeed, it is appreciated that an input option is provided at display 126 in response to receiving indication 501 that icon 250-1 associated with given application 150-1 stored at memory 122 has been selected.

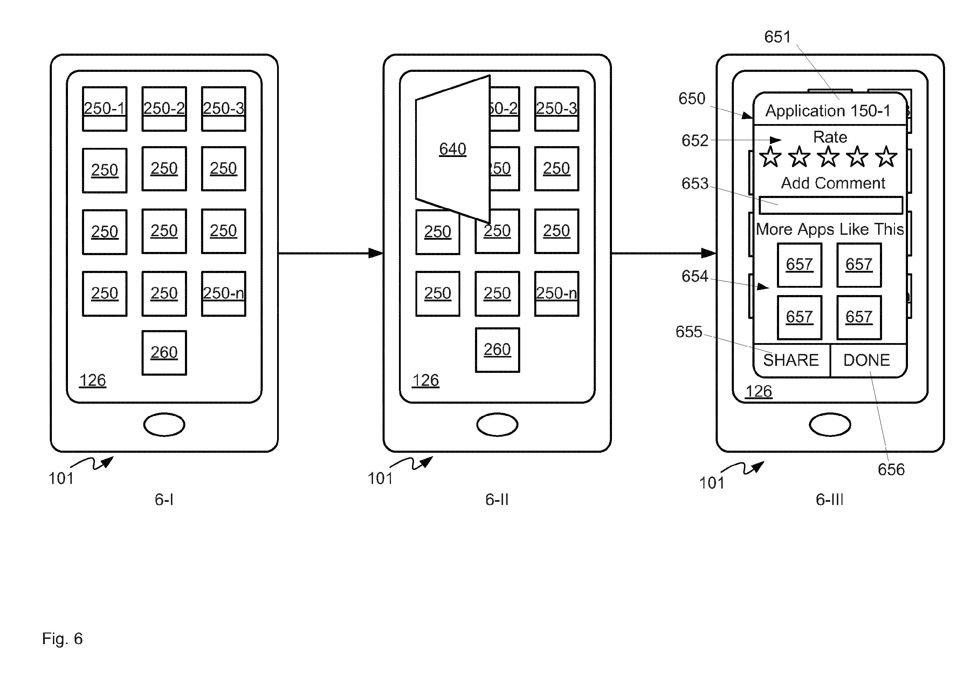

For example, attention is directed to Fig. 6, which depicts a sequence that occurs at display 126, in an example non-limiting implementation, for providing an input option 601 to receive input data in response to icon 250-1 being selected. At 6-I, display 126 displays icon 250-1 just after being selected; while 6-1 is similar to Fig. 2, it is appreciated that at 6-1, icon 250-1 is selected whereas at Fig. 2, icon 250-1 is not selected.

At 6-II, in response to receiving indication 501 that icon 250-1 is selected, processor 120 animates icon 250-1 by replacing icon 250-1 with one or more intermediary icons 640 to provide an input option 650 at 6-III, such that input option 650 appears to be associated with given application 150-1 and not application 160, application 160 for receiving input data and transmitting input data.

In other words, icon 250-1 is animated such that icon 250-1 appears to turn over and come to the foreground of display 126. For example, in the depicted animation, icon 250-1 appears as a card turning over and coming to the foreground of display 126, with input option 650 appearing as the back of the card.

However, it is appreciated that animating icon 250-1 is optional, and any method for providing input option 650 is within the scope of present implementations.

Further while input option 650 appears to be a "flip side" of icon 250-1, and hence might be interpreted by a user as being part of application 150-1, input option 650 is being provided upon processing another application 160 and not application 150-1, which is not launched when icon 250-1 is selected. Indeed, application 160 is generally appreciated to be processed in the background and there is no identifier of application 160 provided in input option 650. It is appreciated, however, that method 300 is not limited to application 150-1 not being processed. For example, in some implementations, application 150-1 can also be running in the background, but not visible at display 126. Indeed, it is appreciated that input option 650 is provided independent of any processing of application 150-1.

In particular non-limiting example implementations, input option 650 comprises a header 651, an area 652 for receiving rating data, an area 653 for receiving review data, an area 654 for selecting other applications to download, a virtual "SHARE" button 655 and a virtual "DONE" button 656. However, the actual format of input option 650 is appreciated to be non-limiting and indeed any format is within the scope of present implementations. Further, input option 650 can include more features than depicted and fewer features than depicted. For example, in some implementations, input option 650 could comprise only one or more of area 652 for receiving rating data, and area 653 for receiving review data without the other features. Once input data was entered at area 652 and/or area 653, a "RETURN" button (virtual, physical and the like), could be actuated in place of button 655.

Header 651 generally identifies given application 150-1; while text "Application 150-1" is depicted in header 651 at 6-III, header 651 can comprise any suitable identifier of application 150-1, including a name of application 150-1.

Area 652 comprises an area for receiving rating data; for example rating data can be received at input device 128, indicating a selection of one or more of the depicted icons, which are shown as stars: the more stars selected, the higher the rating. It is appreciated that processor 120 can determine that one or more stars can be selected by receiving input data indicating that one or more stars have been selected (e.g. a user touches a given star to indicate a rating). However, any suitable method of receiving rating data is within the scope of present implementations: for example, rather than receiving data indicative of a choice of a number of icons, a numerical rating can be received, such "4" out of 5, "9" out of "10", and the like.

Area 653 comprises an area for receiving review data and includes text "Add Comment" and a box and/or field for receiving text input data; for example, a user could enter comments regarding application 150-1 via input device 128. In some implementations, a virtual keyboard can be provided at the touch screen when area 653 is selected, the virtual keyboard used to receive the review data. In yet further implementations, a box and/or field for receiving review data in the form of one or more of text input data, voice input data and video input data can be provided. For example, implementations where review data comprises one or more of voice input data and video input data, an option can be provided for uploading a pre-recorded voice and/or video file; alternatively, an option can be provided for launching a voice and/or video recorder such that voice and/or video data can be recorded for uploading.

In depicted implementations, area 653 comprises one field, however in other implementations, area 653 can comprise two or more fields: for example review data can comprise title data and text of the review, hence area 653 can comprises a field for receiving title data and a field for text if the review. In yet further implementations, area 653 initially comprises one field (for example a title field), but, when focus associated with an input device (e.g. input device 128) is placed on area 653, area 653 expands to include a second field, for example, a review field below a title field. In other words, more fields/input items can progressively be provided based on activity associated with input option 650, with one or more fields being initially hidden.

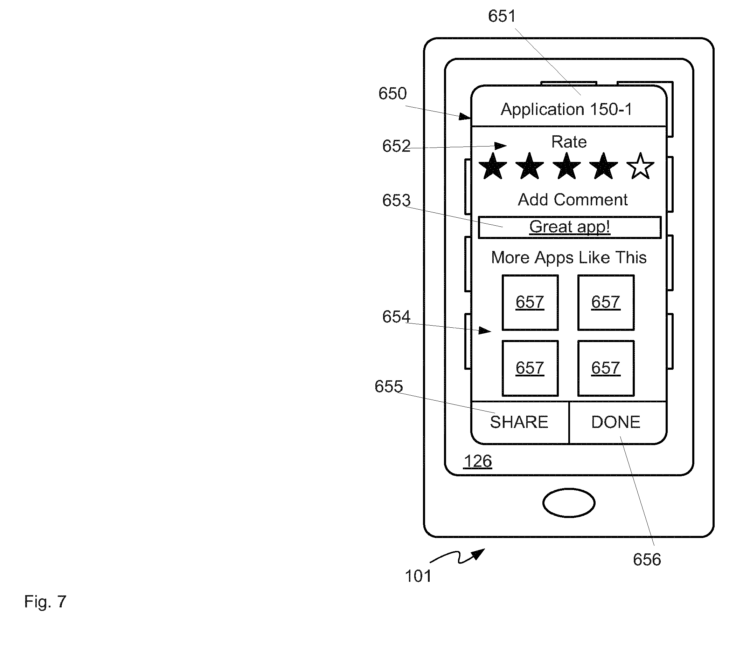

Attention is briefly directed to Fig. 7, which depicts a perspective view of device 101 once rating data and review data has been received at input device 128 (i.e. block 305), and is substantially similar to 6-III in Fig. 6, with like elements having like numbers. In any event, in Fig. 7, device 101 displays input option 650 after rating data has been received and displayed at area 652 (e.g. 4 stars are selected as indicated by a change in shading to the first four stars as compared with 6-III), and after review data has been received and displayed at area 653 (e.g. text "Great app!"). Furthermore, in implementations where more than area 653 comprises two fields, wherein a second field is initially hidden, once area 653 has been selected, a second field can be provided for receiving further review data. For example, text "Great app!" can comprise a title of a review and text of the review can be received in the second field. Alternatively, as described above, one or more options can be provided for uploading a pre-recorded voice and/or video file and/or launching a voice and/or video recorder such that voice and/or video data can be recorded for uploading.

For example, with further reference to Fig. 8, at block 305, input data 801 is received at input device 128 and/or input option 650, for example at one or more of areas 652, 653, and conveyed to processor 120.

Data associated with input data 801 can be transmitted to server 103 (block 307), or indeed any other remote computing device for storing one or more of rating data and review data, for storage in association with given application 150-1 and for later access by other devices, such as device 181. In these implementations, data associated with input data 801 comprises at least a portion 811 of input data 801. For example, portion 811 comprises one or more of rating data and review data. Hence, at least a portion 811 of input data 801 can be transmitted when rating data and/or review data has been received, and input data is received indicating that virtual "DONE" button 656 has been actuated (for example by a user of device 101).

It is assumed that, in order to transmit portion 811, device 101 stores a network address of server 103, and/or any other remote computing device to which portion 811 is to be transmitted. For example, memory 122 can store the network address and/or the network address can be stored within application 160.

It is further appreciated that memory 122 stores an identifier of given application 150-1 and processor 120 is further enabled to transmit portion 811 with the identifier. For example, each application 150 stored at memory 122 can be associated with an identifier, including but not limited to a package ID (identifier) stored in association with a respective application 150, in a respective application 150 and/or in application 160. For example, identifiers of applications 150 can be stored when an application 150 is installed at device 101.

In general, once button 656 is actuated, input option 650 is closed and display 126 of device 101 returns to the state depicted in Fig. 2.

Alternatively, input data can be received indicating that virtual "SHARE" button 655 has been actuated. In these implementations, portion 811 is transmitted with an indication that portion 811 is to be shared, for example with devices associated with device 101; presuming device 181 is associated with device 101, for example in a relational database accessible by server 103 (and/or share infrastructure server), server 103 then pushes portion 811 to device 181, as depicted in Fig. 8. Alternatively, device 181 can request ratings/review data associated with device 101 from server 103 and receive portion 811 in response.

In yet further implementations, portion 811 could be transmitted from device 101 to device 181 without server 103 used as an intermediary there between.

In yet further implementations, portion 811 could be transmitted to device 181 along with a challenge to try the associated application 150-1 and/or create a social support channel.

In a sharing framework, application 160 could also be an endpoint for a MIME (Multipurpose Internet Mail Extensions) type, which could be rating data and/or review data. For example, a new MIME type "review" could be used to transmit rating data and/or review data to third parties, such as device 181. In these implementations, when "SHARE" button 655 is actuated, a different GUI associated with application 160 could be provided at display 126: e.g. a different input option screen configured for receiving sharing data could be provided at display 126). For example, in this GUI, specific devices could be chosen (and/or specific "friends") with whom to share portion 811. Once the rating data/review data is transmitted to server 103 and the chosen devices, the sharing GUI is removed from display 126, such that display 126 returns to one of Fig. 2, 6-III of Fig. 6 or Fig. 7. In any event, in these implementations, portion 811 is received at device 181, presuming device 181 was chosen, with application 160 running therein used a MIME endpoint.

In any event, processor is enabled to provide input option 650 and transmit portion 811 in application 160 which is different from given application 150-1; further application 160 can be processed in the background. For example, processor 120 is enabled to process application 160 for managing applications 150, application 160 for providing input option 650 and transmitting at least a portion 811 of input data 801 to a remote computing device, application 160 launched in the background when indication 501 that icon 250-1 has been selected is received at processor 120.

It is further appreciated that icon 250-1 is displayed at a given screen of display 126, including but not limited to a home screen, an applications screen and the like and processor 120 is further enabled to receive input data 801 from the given screen.

Hence, method 300 generally comprises a convenient way to collect rating data and/or review data without having to incorporate rating logic, such as an API into each application 150, thereby saving storage at memory 122, and without having to inconvenience a user of device 101 with a large number of interactions with device 101 to one of: manually launch application 160 to access an applications storefront, search for an application 150, and rate the application 150; and launch an application 150, search for a GUI associated with the rating logic and rate the application 150. Method 300 further enabled device to receive rating data, review data and the like from a home screen by a touch and hold action (e.g. a long press).

Other implementations are within the scope of present implementations. For example, in some implementations, method 300 could be implemented for subset of applications 150, including but not limited to games only.

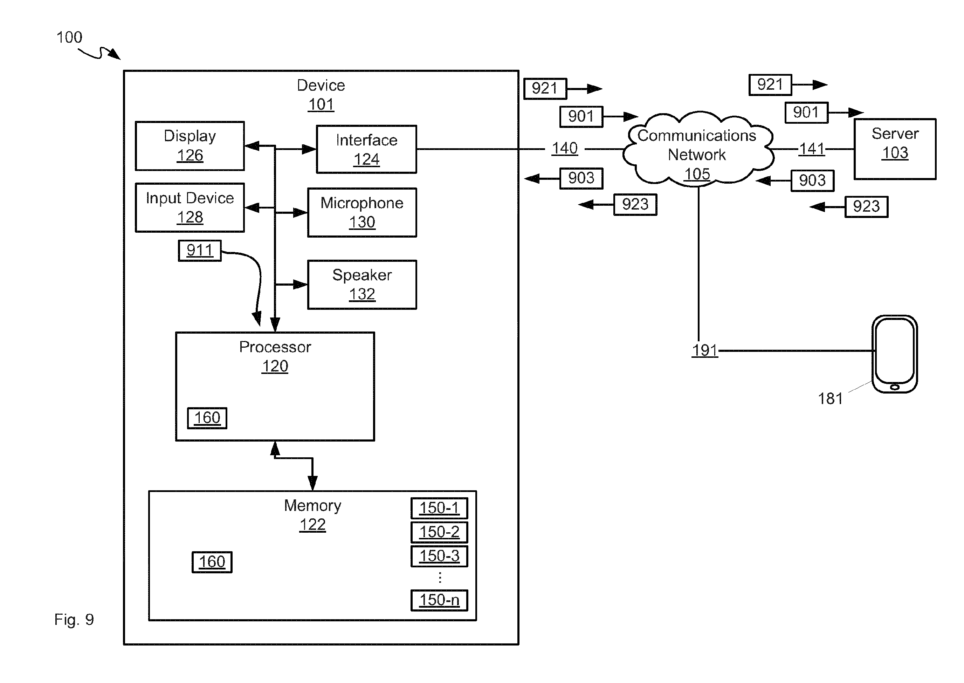

In yet further implementations, method 300 could be used to install new applications. For example, returning now to 6-III of Fig. 6, and with further reference to Fig. 9, area 654 is for selecting other applications to download, and can be populated by processor 120 transmitting a request 901 to server 103 when indication 501 is received, request 901 including an identifier of application 150-1. Server 103 receives request 901, including the identifier of application 150-1, and transmits a response 903 including identifiers of applications associated with application 150-1 that are available for download, according to any suitable criteria stored at server 103; alternatively, request 901 can include criteria for associating applications with application 150-1, which can be configured at application 160, for example by a user and/or a pre-configuration of application 160. In any event server 103 populates response 903 with identifiers of applications associated with application 150-1, and transmits response back to device 101. Indeed, it is appreciated that request 901 can further comprise a network identifier of device 101, such that server 903 can transmit response 903 back to device 101. Non-limiting examples of applications associated with application 150-1 include, but are not limited to, applications from a same company that developed application 150-1 and applications that are in a similar category as application 150-1.

In any event, once response 903 is received, area 654 can be populated with icons 657 indicative of applications associated with application 150-1 and/or any other suitable identifiers of applications associated with application 150-1; indeed, identifiers of applications associated with application 150-1 can include icons 657.

Again with reference to either 6-III of Fig. 6 or Fig. 7, a given icon 657 can be selected which can trigger downloading of an associated application. In other words, when device 101 is implementing method 300, at block 305, rather than receive input data 801 comprising one or more of rating data and review data, processor 120 can receive input data 911 (e.g. see Fig. 9) indicative of a selection of an application for installation, the application for installation corresponding to a corresponding to a selected icon 657. With further reference to Fig. 9, presuming a given icon 657 has been selected, processor 120 transmits a request 921 (block 307: i.e., in these implementations, data associated with input data 911 comprises request 921) for an application associated with a selected icon 657 to server 103, request 921 comprising at least a selection of an application for installation. In some implementations, request 921 can comprise at least a portion of input data 911. Server 103 responds by transmitting installation data 923 for installing the requested application to device 101.

In some implementations, request 921 can occur when a given icon 657 is selected. In other implementations, selection of a given icon 657 can cause application 160, and/or a storefront application, to launch in the foreground (not depicted) of display 126, and options for downloading and/or purchasing and/or installing the application can be provided. In these applications, request 921 is not transmitted until the selected application is purchased and/or installation of the application is otherwise confirmed via application 160. In yet further implementations, selection of one of icons 657 could either initiate purchase/download of the associated application or alternatively, a details page for the associated application could be provided along with purchase/download options. In yet further implementations an option to provide a storefront page could be provided, for example listing more related applications based on an association rule being used.

In any event, once installation of the selected application has been initiated, device 101 can return to the view in 6-III of Fig. 6 or the view in Fig. 7 and method 300 can continue, with block 305 occurring again, however with input data comprising rating data and/or review data being received, as described above. It is hence appreciated that download/installation of the selected application can occur in the background, and there these processes can occur while the view of 6-III or the view in Fig. 7 is again provided.

In other words, in some implementations, once download/installation is initiated, the view that was provided before download/installation was initiated is again provided. Hence, as download/installation can be initiated from either input option 650 or from a storefront application or a content details screen, the same view is provided once download/installation of a selected application can be initiated. From a user perspective, when a user was on rating screen, such as view 6-III, they could start writing a review at area 653 (i.e. input data 801 is received), but then select an icon 657 to initiated download of application, and then view 6-III could again be provided while download of the application occurs in the background such that the review could be completed (i.e. further input data 801 received) and submitted (i.e. virtual "SHARE" button 655 is actuated). Once portion 811 is transmitted, a home screen where input option 650 was launched could again be provided, i.e. a screen where input option 650 was initially launched.

In some implementations where the storefront application was launched, for example to view details of an application associated with an icon 657, and/or initiated download/purchase of the application, the storefront application would be either closed (manually or automatically) or input data could be received to switch back to input option 650 (i.e. the storefront application is still running in the background).

In yet further implementations, a details screen associated with the selected application could be launched without launching the full storefront application. In other words, an icon 657 could be selected, and a details page for the associated application could be provided to initiate download/purchase thereof; alternatively, the details page could be closed without initiating download/purchase and input option 650 could again be provided. In these implementations, the full storefront application is not launched, so there is no need to switch between the storefront application and input option 650.

In some implementations, while download and/or installation of an application is occurring, a transient notification can be provided at display 126 to indicate the download/installation is occurring. For example, the transient notification can comprise a suitable icon in a notifications header provided at display 126.

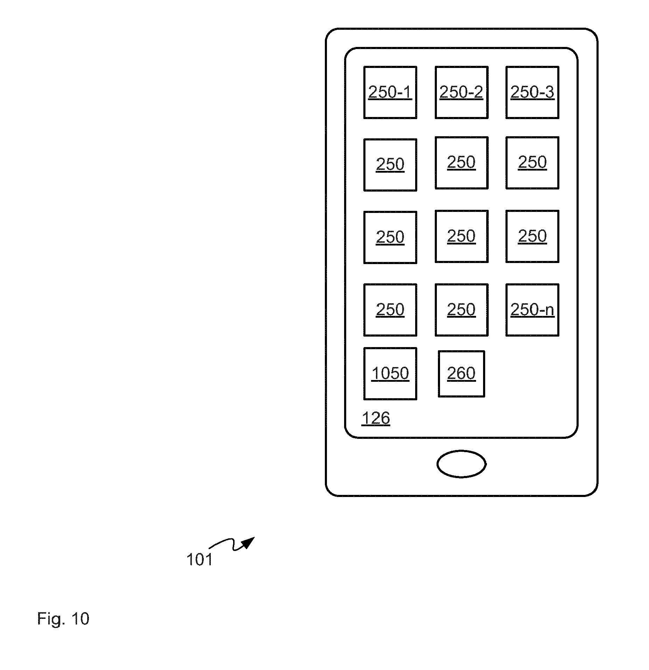

Once the application associated with a selected icon 657 is installed, input option 650 is dismissed, device 101 again provides a home screen, a view as depicted in Fig. 10 is provided, which is substantially similar to Fig. 2, with like elements having like numbers, but including a new icon 1050 corresponding to the newly installed application. In other words, the home screen is updated to show icon 1050 associated with the newly installed application.

In yet further implementations, method 300 could be used to upgrade applications as will be explained hereafter. For example, rather than receiving input data comprising rating data and/or review data, input data could comprises a confirmation that a given application 150 is to be updated, and processor 120 can be further enabled to receive update data from a remote computing device, such as server 103, in response to transmitting input data thereto.

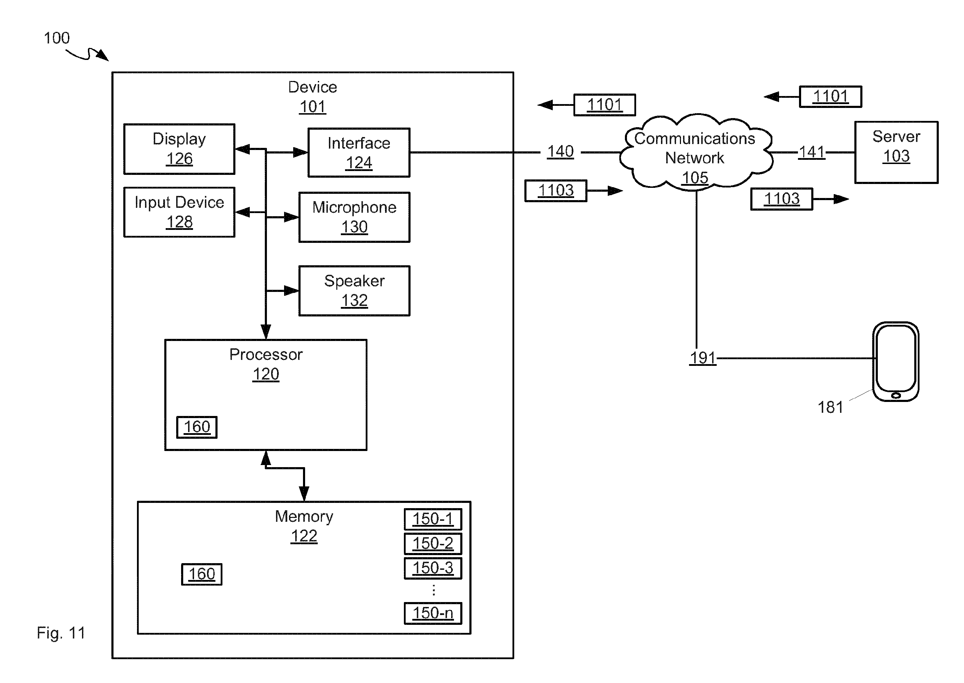

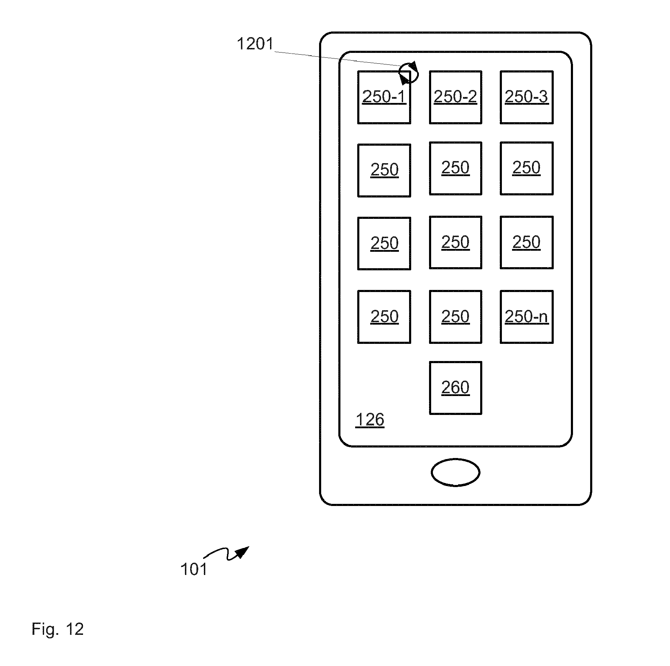

For example, attention is next directed to Figs. 11 and 12 which are substantially similar to Figs. 1 and 2, respectively, with like elements having like numbers. However, in these implementations, server 103 determines that an update to a given application 150, for example application 150-1, is available. For example, server 103 can received application upgrade data from a computing device associated with a developer of application 150-1.

It is appreciated that server 103 can store a record of application 150-1 being installed at device 101, and a network address of device 101. Hence, once server determines that an update to application 150-1 is available, server 103 then pushes a notification 1101 of an available update to device 101. It is furthermore appreciated that notification 1101 can be transmitted via one or more of a push server and/or a push infrastructure (not depicted) associated with server 103.

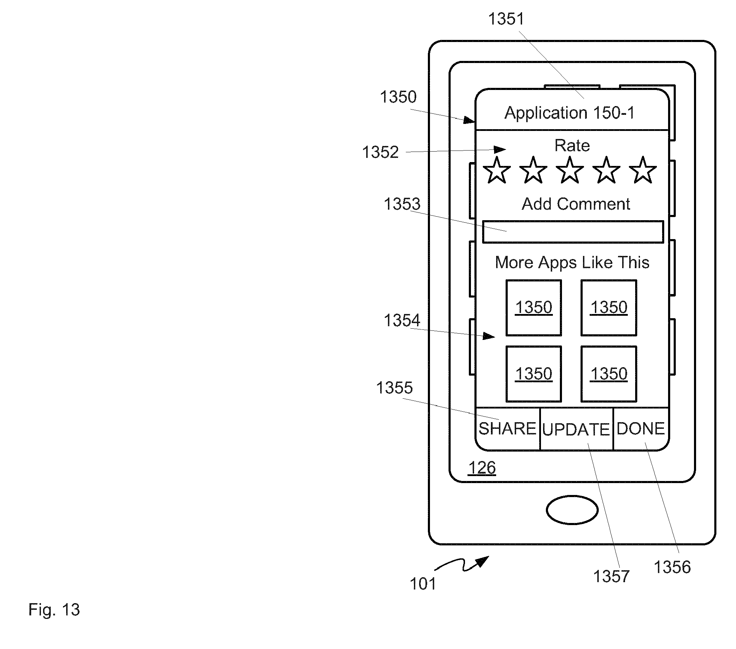

In any event, device 101 receives notification 1101 and in response adds an indicator 1201 to icon 250-1 associated with application 150-1, as depicted in Fig. 12. Method 300 can then be implemented as above, with block 301 occurring when an indication that icon 250-1 has been selected is received at processor 120, similar to indicator 501. In response to block 301, block 303 is implemented to provide an input option 1350 as depicted in Fig. 13, which is substantially similar to 6-III of Fig. 6, with like elements having like numbers, however preceded by a "13" rather than a "6". For example, input option 1350 comprises a header 1351, an area 1352 for receiving rating data, an area 1353 for receiving review data, an area 1354 for selecting other applications to download as indicated by icons 1350, a virtual "SHARE" button 1355 and a virtual "DONE" button 1356. However, input option 1350 further comprises a virtual "UPDATE" button 1357.

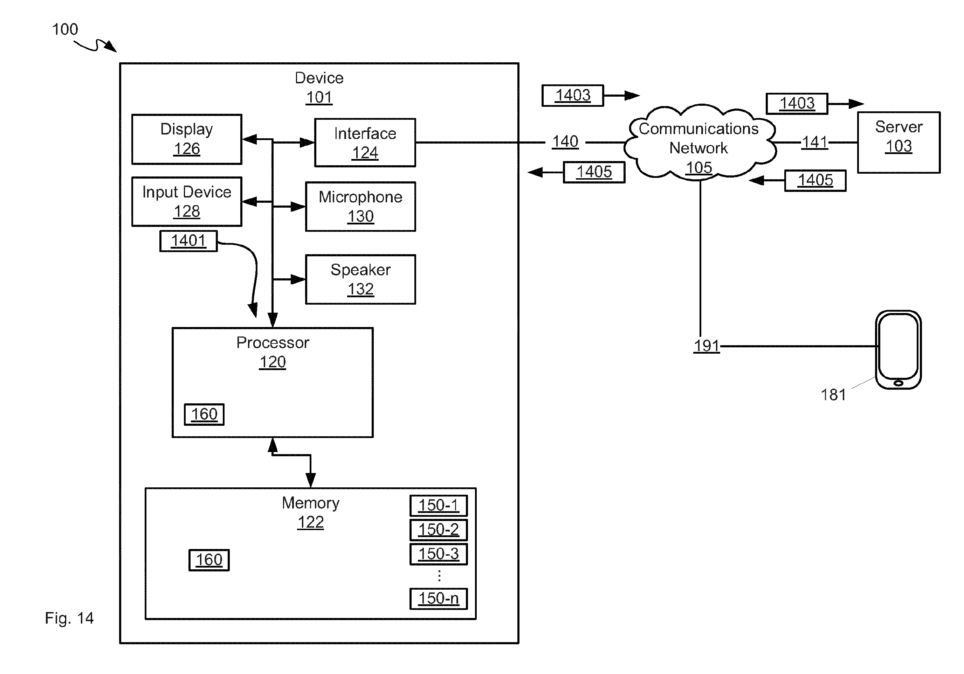

When button 1357 is actuated, input data 1401 is received at processor 120 (block 305) from input device 128, input data 1401 comprising a confirmation that given application 150-1 is to be updated, as depicted in Fig. 14 (substantially similar to Fig. 12, with like elements having like numbers). Processor 120 is further enabled to transmit a request 1403 for update data to server 103, or any other suitable remote computing device (block 307: i.e. in these implementations, data associated with input data 1401 comprises request 1403). In some implementations, request 1403 can comprise at least a portion of input data 1401. It is appreciated that request 1403 comprises an identifier of application 150-1. Server 103 receives request 1403 and in response transmits update data 1405 to device 101, update data 1405 for updating application 150-1. Device 101 then updates application 150-1 using update data 1405.

Hence, a convenient method of collecting data associated with applications at a device, and transmitting the data to a remote computing device, is provided, which leads to increased storage space at the device. The method further makes rating and reviewing applications easier, as well as upgrading, finding and installing new applications, by providing a convenient interface accessible through icons associated with respective applications. Indeed, this obviates the need to manually launch an application manager. The method can be especially useful on mobile device where storage and processing is at a premium, and reduction of files sizes of applications is desirable.

Those skilled in the art will appreciate that in some implementations, the functionality of device 101 can be implemented using pre-programmed hardware or firmware elements (e.g., application specific integrated circuits (ASICs), electrically erasable programmable read-only memories (EEPROMs), etc.), or other related components. In other implementations, the functionality of device 101 can be achieved using a computing apparatus that has access to a code memory (not shown) which stores computer-readable program code for operation of the computing apparatus. The computer-readable program code could be stored on a computer readable storage medium which is fixed, tangible and readable directly by these components, (e.g., removable diskette, CD-ROM, ROM, fixed disk, USB drive). Furthermore, it is appreciated that the computer-readable program can be stored as a computer program product comprising a computer usable medium. Further, a persistent storage device can comprise the computer readable program code. It is yet further appreciated that the computer-readable program code and/or computer usable medium can comprise a non-transitory computer-readable program code and/or non-transitory computer usable medium. Alternatively, the computer-readable program code could be stored remotely but transmittable to these components via a modem or other interface device connected to a network (including, without limitation, the Internet) over a transmission medium. The transmission medium can be either a non-mobile medium (e.g., optical and/or digital and/or analog communications lines) or a mobile medium (e.g., microwave, infrared, free-space optical or other transmission schemes) or a combination thereof.

A portion of the disclosure of this patent document contains material which is subject to copyright protection. The copyright owner has no objection to the facsimile reproduction by any one of the patent document or patent disclosure, as it appears in the Patent and Trademark Office patent file or records, but otherwise reserves all copyrights whatsoever.

Persons skilled in the art will appreciate that there are yet more alternative implementations and modifications possible, and that the above examples are only illustrations of one or more implementations. The scope, therefore, is only to be limited by the claims appended hereto.

## Claims

1. A device (100) comprising:
a processor (120), a memory (122), a communication interface (124) and a display (126), the processor (120) enabled to:
in response to receiving an indication that an icon associated with a given application stored at the memory (122) has been selected, provide an input option at the display (126) to receive input data associated with the given application without launching the given application; and,
transmit, via the communication interface (124), data associated with the input data to a remote computing device (103).

2. The device (100) of claim 1, wherein the input data comprises one or more of rating data and review data associated with the given application, and the data associated with the input data comprises at least a portion of one or more of the rating data and the review data.

3. The device (100) of claim 1 or 2, wherein the memory (122) stores an identifier of the given application and the processor (120) is further enabled to transmit the data associated with the input data with the identifier.

4. The device (100) of any previous claim, wherein the processor (120) is further enabled to provide the input option and transmit the data associated with the input data in another application different from the given application, the another application processed in the background.

5. The device (100) of any previous claim, wherein the processor (120) is further enabled to process another application for managing applications, the another application for providing the input option and transmitting the data associated with the input data, the another application launched in the background when the indication that the icon has been selected is received.

6. The device (100) of any previous claim, wherein the remote computing device (103) comprises an application server and the data associated with the input data is stored in association with the given application for later access by other devices (181).

7. The device (100) of any previous claim, wherein the input data comprises a confirmation that a new application is to be installed, the data comprises a request to install the new application and the processor (120) is further enabled to receive installation data from the remote computing device (103) in response to transmitting the request to the remote computing device (103).

8. The device (100) of any previous claim, wherein the input data comprises a confirmation that the given application is to be updated, the data comprises a request to update the given application and the processor (120) is further enabled to receive update data from the remote computing device (103) in response to transmitting the request to the remote computing device (103).

9. A method comprising,
at a device (100) comprising a processor (120), a memory (122), a communication interface (124) and a display (126), in response to receiving an indication that an icon associated with a given application stored at the memory (122) has been selected, providing, via the processor (120), an input option at the display (126) to receive input data associated with the given application without launching the given application; and,
transmitting, via the communication interface (124), data associated with the input data to a remote computing device (103).

10. The method of claim 9, wherein the input data comprises one or more of rating data and review data associated with the given application, and the data associated with the input data comprises at least a portion of one or more of the rating data and the review data.

11. The method of claim 9 or 10, wherein the memory (122) stores an identifier of the given application and the method further comprises transmitting the data associated with the input data with the identifier.

12. The method of any of claims 9 to 11, further comprising providing the input option and transmitting the data associated with the input data in another application different from the given application, the another application processed in the background.

13. The method of any of claims 9 to 12, further comprising processing another application for managing applications, the another application for providing the input option and transmitting the data associated with the input data, the another application launched in the background when the indication that the icon has been selected is received.

14. The method of any of claims 9 to 13, wherein the input data comprises a confirmation that a new application is to be installed, the data comprises a request to install the new application and the method further comprises receiving installation data from the remote computing device (103) in response to transmitting the request to the remote computing device.

15. The method of any of claims 9 to 14, wherein the input data comprises a confirmation that the given application is to be updated, the data comprises a request to update the given application and the method further comprises receiving update data from the remote computing device (103) in response to transmitting the request to the remote computing device (103).

## Amended claims

### Amended claims in accordance with Rule 137(2) EPC.

**1.** A mobile device (100) comprising:
a processor (120), a memory (122), a communication interface (124) and a display (126), the processor (120) enabled to:
in response to receiving an indication that an icon associated with a given application stored at the memory (122) has been selected, provide an input option at the display (126) to receive input data associated with the given application without launching the given application by replacing the icon with one or more intermediary icons to provide the input option, such that the input option appears to be associated with given application and not another application different from the given application, the another application for managing applications, receiving the input data and transmitting the input data, the another application launched in the background when the indication that the icon has been selected is received; and,
transmit, via the communication interface (124), data associated with the input data to a remote computing device (103).

**2.** The mobile device (100) of claim 1, wherein the input data comprises one or more of rating data and review data associated with the given application, and the data associated with the input data comprises at least a portion of one or more of the rating data and the review data.

**3.** The mobile device (100) of claim 1 or 2, wherein the memory (122) stores an identifier of the given application and the processor (120) is further enabled to transmit the data associated with the input data with the identifier.

**4.** The mobile device (100) of any previous claim, wherein the processor (120) is further enabled to provide the input option and transmit the data associated with the input data in the another application different from the given application, the another application processed in the background.

**5.** The mobile device (100) of any previous claim, wherein the remote computing device (103) comprises an application server and the data associated with the input data is stored in association with the given application for later access by other devices (181).

**6.** The mobile device (100) of any previous claim, wherein the input data comprises a confirmation that a new application is to be installed, the data comprises a request to install the new application and the processor (120) is further enabled to receive installation data from the remote computing device (103) in response to transmitting the request to the remote computing device (103).

**7.** The mobile device (100) of any previous claim, wherein the input data comprises a confirmation that the given application is to be updated, the data comprises a request to update the given application and the processor (120) is further enabled to receive update data from the remote computing device (103) in response to transmitting the request to the remote computing device (103).

**8.** A method comprising,
at a mobile device (100) comprising a processor (120), a memory (122), a communication interface (124) and a display (126), in response to receiving an indication that an icon associated with a given application stored at the memory (122) has been selected, providing, via the processor (120), an input option at the display (126) to receive input data associated with the given application without launching the given application by replacing the icon with one or more intermediary icons to provide the input option, such that the input option appears to be associated with given application and not another application different from the given application, the another application for managing applications, receiving the input data and transmitting the input data, the another application launched in the background when the indication that the icon has been selected is received; and,
transmitting, via the communication interface (124), data associated with the input data to a remote computing device (103).

**9.** The method of claim 8, wherein the input data comprises one or more of rating data and review data associated with the given application, and the data associated with the input data comprises at least a portion of one or more of the rating data and the review data.

**10.** The method of claim 8 or 9, wherein the memory (122) stores an identifier of the given application and the method further comprises transmitting the data associated with the input data with the identifier.

**11.** The method of any of claims 8 to 10, further comprising providing the input option and transmitting the data associated with the input data in the another application different from the given application, the another application processed in the background.

**12.** The method of any of claims 8 to 11, wherein the input data comprises a confirmation that a new application is to be installed, the data comprises a request to install the new application and the method further comprises receiving installation data from the remote computing device (103) in response to transmitting the request to the remote computing device.

**13.** The method of any of claims 8 to 12, wherein the input data comprises a confirmation that the given application is to be updated, the data comprises a request to update the given application and the method further comprises receiving update data from the remote computing device (103) in response to transmitting the request to the remote computing device (103).
